(19) Europäisches Patentamt
European Patent Office
Office européen des brevets

(11) Numéro de publication : **0 442 778 B1**

(12) # FASCICULE DE BREVET EUROPEEN

(45) Date de publication du fascicule du brevet : **18.05.94 Bulletin 94/20**

(51) Int. Cl.$^5$ : **C01G 15/00,** C22B 3/00

(21) Numéro de dépôt : **91400266.2**

(22) Date de dépôt : **05.02.91**

(54) **Procédé d'extraction de thallium.**

(30) Priorité : **05.02.90 FR 9001301**

(43) Date de publication de la demande : **21.08.91 Bulletin 91/34**

(45) Mention de la délivrance du brevet : **18.05.94 Bulletin 94/20**

(84) Etats contractants désignés : **AT BE DE DK ES FR GB GR IT LU NL SE**

(56) Documents cités :
**DD-A- 222 788**
**US-A- 3 755 161**
**US-A- 4 297 183**
**PATENT ABSTRACTS OF JAPAN, vol. 13, no. 479 (C-648)[3827], 30 octobre 1989; & JP-A-1 188422 (AGENCY OF IND. SCIENCE & TECHNOL.) 27-07-1989**

(56) Documents cités :
**CHEMICAL ABSTRACTS, vol. 94, no. 4, 26 janvier 1981, page 370, résumé no. 21164n, Columbus, Ohio, US; M. SUDERSANAN et al.: "Extraction of indium, cadmium and thallium by salts dinonylnaphthalenesulfonic acid", & PROC.- INDIAN ACAD. SCI., (SER): CHEM. SCI. 1980, 89(5), 431-4**

(73) Titulaire : **METALEUROP S.A.**
**Le Péripole 1 58, rue Roger-Salengro**
**F-94120 Fontenay-sous-Bois (FR)**

(72) Inventeur : **Albert, Luc**
**13, rue de Bures**
**F-78990 Elancourt (FR)**
Inventeur : **Masson, Hervé**
**39, rue des Sablons**
**F-78750 Mareuil-Marly (FR)**

(74) Mandataire : **Warcoin, Jacques**
**Cabinet Régimbeau 26, avenue Kléber**
**F-75116 Paris (FR)**

**EP 0 442 778 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet l'extraction du thallium contenu dans des eaux usées, notamment d'origine industrielle, et la récupération du thallium extrait.

Elle a plus particulièrement pour objet la fixation sur résines échangeuses d'ions de l'ion thalleux présent dans des solutions qui peuvent être très diluées.

On sait que le thallium est un métal rare qui se trouve notamment comme impureté mineure dans les pyrites et les blendes. Cet élément métallique est important à éliminer en raison de sa forte toxicité. Il est également intéressant à récupérer car ses sels sont utilisés pour différents usages, par exemple en médecine comme épilatoire "per os", pour la fabrication d'imitations de diamants, comme catalyseur, comme solution de Clérisi dans la mesure des poids spécifiques de mélanges de minéraux.

Par ailleurs, la toxicité de cet élément conduit à l'adoption de normes dans le domaine de la sécurité du travail (dès 1960, teneur inférieure à 0,20 mg/$Nm^3$) et de normes de rejets stricts.

Les techniques actuelles d'extraction sont à la fois coûteuses et peu satisfaisantes dans la mesure où elles conduisent au stockage de gâteaux d'hydroxyde à teneur relativement faible en thallium. En effet, la rareté de cet élément ne conduit dans les effluents qu'à des concentrations très faibles à partir desquelles il est difficile de faire des précipités concentrés tout en ayant un taux d'élimination complet.

C'est pourquoi un des buts de la présente invention est de fournir un procédé qui permette d'extraire le thallium de solutions dans lesquelles il est dissous à faible concentration pour réduire la concentration en thallium desdites solutions à des valeurs acceptables et en tout cas au moins inférieures au seuil de détection usuel, c'est-à-dire inférieure à 0,1 mg/l.

Un autre but de la présente invention est de fournir un procédé qui soit sélectif par rapport aux autres métaux ou métalloïdes avec lequel le thallium est associé, tels que les éléments contenus dans les blendes et dans les pyrites.

Un autre but est de fournir un procédé du type ci-dessus qui utilise des résines échangeuses d'ions qui soient faciles à régénérer.

Un autre but de la présente invention est de fournir un procédé qui permette d'obtenir le thallium soit sous forme métallique, soit sous forme de sel commercialisable de bonne pureté, soit sous forme de concentré aisément stockable.

Ces buts, ainsi que d'autres qui apparaîtront par la suite, sont atteints par un procédé pour extraire et récupérer le thallium à partir d'une solution dans laquelle il est présent sous forme de sels d'acides minéraux forts tels que les acides sulfuriques halohydriques, caractérisé par le fait qu'il comporte une étape de mise en contact de ladite solution avec une résine échangeuse d'ions présentant un groupement thiol.

Par groupement thiol on entend tout groupement présentant la séquence d'atomes -C-S-H et de préférence les groupements Thio-alcool ou Thio-phénol ; toutefois, parmi ces groupements actifs, les résines comportant à la fois un groupement thiol et un groupement sulfonique vicinaux tel que par exemple celle commercialisée par la Société DUOLITE sous le nom d'IMAC GT 73 donnent de meilleurs résultats. C'est pourquoi on utilise de préférence cette résine qui présente les caractéristiques principales suivantes :

- un réseau polystyrène réticulé à sites actifs légèrement acides du type spécifié ci-dessus
- une capacité totale de 1 400 milliéquivalents par litre
- une densité sous forme $H^+$ de 0,8.

Ces deux dernières caractéristiques sont sans importance majeure sur le procédé.

Ce type de résine a été essentiellement mis au point pour éliminer le zinc, l'argent, le cuivre, le plomb, le cadmium et, dans une moindre mesure, le nickel, le cobalt et le fer (sous forme Fe II).

Les recherches qui ont conduit au procédé selon la présente invention ont montré que, sans que cela fût prévisible, il était possible dans divers milieux d'acides et de sels d'acides minéraux, de fixer le thallium sélectivement vis-à-vis de métaux tels que le zinc, le cadmium, le nickel, le cobalt, le plomb, le bismuth, le fer, les alcalins, les alcalino-terreux et un métalloïde comme l'antimoine ou l'arsenic. La sélectivité vis-à-vis de ces divers métaux ou métalloïdes est évidemment variable. La sélectivité vis-à-vis du cuivre et de l'arsenic reste moins bonne, mais elle est toutefois suffisante pour assurer une bonne séparation selon les variantes décrites ci-dessous.

Il est préférable que le potentiel redox de la solution soit maintenu à un niveau réducteur, d'une part afin d'épargner les groupements thiols qui sont réducteurs, d'autre part pour que le thallium puisse soit être déjà à la valence oxydée la plus faible, soit qu'il puisse l'atteindre pendant son contact avec la résine.

Un réducteur satisfaisant est l'acide sulfureux et ses sels. Ceci est particulièrement net pour le thallium en raison de la stabilité des complexes sulfite de l'ion thalleux.

De préférence, le potentiel redox est maintenu sur le diagramme potentiel redox/pH en-dessous d'une ligne variant de 0,45 V à pH 0 jusqu'à + 0,2 V à pH 6, puis - 0,1 V à pH 13 et au-dessus d'une valeur supérieure à

- 0,4 V.

Les études ayant mené à la présente invention ont montré que la forme la plus faiblement oxydée du thallium se fixait sur la résine lorsque le pH était supérieur à 1.

Pour la mise en oeuvre du procédé d'extraction du thallium selon l'invention, il est donc souhaitable que le pH de la solution initiale à traiter soit ajusté à une valeur supérieure à 1.

Pour récupérer sélectivement la thallium contenu dans une solution comportant d'autres espèces susceptibles de se fixer sur la résine, on peut envisager deux variantes du procédé selon l'invention.

Selon une première variante, on ajuste le pH à une valeur pour laquelle la quasi-totalité du thallium est fixée sur la résine alors qu'une très faible partie, voire une partie non détectable des autres éléments présents est fixée. Par exemple, l'arsenic est particulièrement bien fixé aux pH acides et la fixation est excellente même à des pH négatifs. Si, à partir d'une solution contenant à la fois du thallium et de l'arsenic, l'on désire fixer sélectivement le thallium, on maintient le pH à une valeur supérieure à 4, de préférence à une valeur comprise entre 6 et 13.

L'élution du thallium est ensuite réalisée au moyen d'une solution acide à un pH inférieur à environ 1, de préférence inférieur ou égal à zéro.

Selon une deuxième variante, on ajuste le pH à une valeur à laquelle la quasi-totalité du thallium est fixée sur la résine, mais également une quantité non négligeable d'un ou plusieurs autres éléments. On procède ensuite à des élutions d'une part, dans des conditions spécifiques au thallium pour récupérer le thallium et d'autre part, dans des conditions spécifiques aux autres éléments si l'on veut récupérer ces derniers ou régénérer complètement la résine.

Lorsque l'arsenic a été fixé, l'élution est réalisée au moyen d'une solution basique à un pH supérieur à environ 8, avantageusement supérieur à 9 et de préférence entre 9,5 et 15. On peut ainsi utiliser l'ammoniaque à des concentrations entre 1 N et 10 N et de la soude entre 0,5 N et 3 N.

Ces propriétés, inattendues et nouvellement découvertes par les études ayant menées à la présente invention, des résines à groupement thiol, permettent de réaliser divers modes de mise en oeuvre de l'invention selon que l'on désire ou non séparer complètement le thallium des autres éléments présents dans la solution et selon l'endroit et le moment choisis pour ladite séparation.

Ainsi, selon une variante de l'invention, on peut mettre en oeuvre un procédé caractérisé par le fait qu'il comporte les étapes suivantes :

a) fixation du thallium et de l'arsenic à un pH compris entre 1 et 3, l'arsenic et le thallium étant présents dans une solution de sulfate de zinc et/ou de cadmium.

b) élution du thallium au moyen d'acide sulfurique à une normalité comprise entre 0,5 et 5, de préférence 0,5 à 2.

c) élution de l'arsenic au moyen d'une solution alcaline choisie dans le groupe des hydroxydes et des carbonates alcalins et d'ammoniums (ammoniaque, amine, tétra-alcoyl ammonium) à un pH supérieur à 8.

Selon une autre variante de l'invention, on peut mettre en oeuvre un procédé pour extraire l'arsenic, le thallium et le cas échéant le cadmium d'une solution minérale les contenant, caractérisé par le fait qu'il comporte la séquence d'étapes suivantes :

a) mise en contact de la solution avec la résine à groupement thiol à un pH inférieur à 1

b) neutralisation partielle pour amener la solution à un pH compris entre 2 et 5 et mise en contact avec un autre lit de résine du même type que le précédent

c) cémentation éventuelle du cadmium à la poudre de zinc ou précipitation d'un carbonate de cadmium

d) régénération de la résine chargée en arsenic dans l'étape a) au moyen d'une solution alcaline choisie dans le groupe des hydroxydes et des carbonates alcalins et d'ammoniums

e) régénération de la résine chargée en thallium dans l'étape b) au moyen d'une élution à l'acide sulfurique à une normalité comprise ente 0,5 et 5.

Le groupement thiol étant facilement oxydable, il est préférable de régénérer les groupements qui avaient été oxydés par du sulfure de sodium.

Les exemples qui suivent et qui ne présentent aucun caractère limitatif ont pour but de mettre les spécialistes à même de déterminer aisément les conditions opératoires qu'il convient d'utiliser dans chaque cas particulier.

## EXEMPLE 1

Co-fixation de l'arsenic et du thallium en présence de zinc et de cadmium

Une solution ayant la composition suivante :

| | | |
|---|---|---|
| Cd | | 6,3 g/l |
| As | | 0,82 g/l |
| Zn | | 2,1 g/l |
| Tl | | 0,34 g/l |
| Fe | | 0,022 g/l |
| Anions | mélange d'ions bisulfite (en équilibre avec l'acide sulfureux), sulfate, bisulfate et chlorure | 5 g/l |

est mise en contact avec une résine IMAC GT 73 dans les conditions suivantes :

- 100 ml de la solution ci-dessus pour 20 ml de résine température ambiante
- pH initial : 2,07
- pH final : 1,98.

L'analyse de la solution obtenue donne les résultats suivants :

Tl : 0,057 g/l, soit 1,41 g/l sur la résine
Cd : 5 g/l, soit 6,5 g/l sur la résine
As : non détecté, soit environ 4 g/l sur la résine.

Cette solution est remise en contact avec de la résine dans les conditions suivantes :

- 100 ml de la solution ci-dessus pour 20 ml de résine température ambiante
- pH initial : 1,98
- pH final : 1,87.

Après le deuxième contact, l'analyse de la solution donne les résultats suivants :

Tl : 0,006 g/l, soit 0,26 g/l sur la résine
Cd : 3,4 g/l, soit 8 g/l sur la résine.

Le coefficient de partage apparent varie beaucoup entre les deux contacts puisqu'il est pour le thallium de 25 lors du premier contact et de 43 pour le second, alors qu'il est pour le cadmium de 1,3 pour le premier et de 2,3 pour le second.

Le coefficient de sélectivité entre cadmium et thallium en revanche ne varie pas puisqu'il est de 19 dans le premier cas et de 18,4 dans le second.

Le zinc n'est pas fixé.

Chaque essai a été réalisé avec de la résine vierge.

## EXEMPLE 2

### Séparation de thallium

### Fixation du thallium

Une solution ayant la composition suivante :

Tl 240 mg/l
As 270 mg/l
anions mélange d'ions bisulfite (en équilibre avec l'acide sulfureux), sulfate et bisulfate

est mise en contact avec une résine IMAC GT 73 dans les conditions :

- vitesse de percolation : 6 BV/heure
- volume total percolé : 50 BV
- pH initial : 8

Après percolation, la solution contient moins de 1 mg/litre de thallium et la résine a fixé 13 g/l de thallium.

### Elution de la résine

L'élution est effectuée avec une solution aqueuse d'acide sulfurique contenant 20 g/l de $H_2SO_4$.

La solution après élution contient 5,5 g/l de Tl, correspondant à un rendement d'élution de 91%.

Cémentation du thallium sur plaque de zinc

Le rendement est supérieur à 99% après 1 heure à pH 3.

## EXEMPLE 3

Fixation du thallium sur résines . Essai comparatif

Les essais ont été effectués sur les 2 résines suivantes :

- résine vendue sous la dénomination IMAC TMR (groupement thiol -S-H) commercialisée par la Société Duolite ;
- résine vendue sous la dénomination LEWATIT TP 214 commercialisée par la Société Bayer

thiourée : $H_2N$ C = S $H_2N$

La solution traitée est une solution composée de :

Tl : 0,64 g/l  $SO_4^{=}$ = 25,9 g/l
Cd : 1 mg/l  $Cl^-$ = 6,6 g/l
As : 1 mg/l  pH = 9,6

l'électroneutralité est assurée par l'ion sodium

Après un contact d'une heure, à température ambiante entre 10 ml de résine et 5 litres de phase aqueuse, nous observons :

IMAC GT 73  ( charge sur résine : 151 g/l
( Tl en phase aqueuse : 0,338 g/l
TP 214  ( charge sur résine : 10 g/l
(Tl en phase aqueuse : 620 mg/l

## EXEMPLE 4

Une solution dont la composition est la suivante :

Zn : 140 g/l  (sous la forme de $ZnSO_4$)
Cd : 5 g/l  (sous la forme de $CdSO_4$)
Tl : 0,26 g/l  (sous la forme de $Tl_2SO_4$)

percole au travers d'une colonne de résine IMAC GT 73 à la vitesse de 5 BV/h et à température ambiante.

Deux essais ont été menés à des pH différents. Après saturation de la colonne de résine, nous avons mesuré la charge en cadmium, thallium et en zinc de la résine.

| Résultats | Tl fixé | Cd fixé | Sélectivité |
|---|---|---|---|
| essai 1 pH = 1,5 | 2,57 g/l | 5,94 g/l | 8,3 |
| essai 2 pH = 3 | 6,89 g/l | 27,7 g/l | 4,8 |

La sélectivité est définie par le rapport de deux facteurs $\frac{\alpha}{\beta}$ sachant que :

$$\alpha = \frac{[Tl]\ \Phi\ organique}{[Tl]\ \Phi\ aqueuse} \qquad \beta = \frac{[Cd]\ \Phi\ organique}{[Cd]\ \Phi\ aqueuse}$$

La charge en zinc de la résine est quasi nulle après avoir chassé l'imprégnant.

## Revendications

1. Procédé pour extraire et récupérer le thallium à partir d'une solution qui le contient sous forme de sels d'acides minéraux forts, caractérisé par le fait qu'il comporte une étape de mise en contact de ladite solution avec une résine échangeuse d'ions présentant un groupement thiol.

2. Procédé selon la revendication 1, caractérisé par le fait que la résine échangeuse d'ions présentant le groupement Thiol comporte également des groupements sulfoniques vicinaux.

3. Procédé selon la revendication 1 et 2, caractérisé par le fait que la solution contient en outre des sels choisis dans le groupe constitué par les sels de zinc, de cadmium, de nickel, de cobalt, de plomb, de bismuth et d'arsenic.

4. Procédé selon les revendications 1 à 3 prises séparément, caractérisé par le fait que l'on maintient le potentiel redox à un niveau réducteur.

5. Procédé selon la revendication 4, caractérisé par le fait que le potentiel redox est maintenu sur le diagramme potentiel redox/pH en-dessous d'une ligne variant de 0,45 V à pH 0 jusqu'à + 0,2 V à pH 6, puis - 0,1 V à pH 13.

6. Procédé selon les revendications 1 à 5 prises séparément, caractérisé par le fait que le pH est maintenu à une valeur supérieure à 1.

7. Procédé selon les revendications 3 à 6 prises séparément, caractérisé par le fait que, pour fixer sélectivement le thallium par rapport à l'arsenic, l'on fixe le pH à une valeur comprise entre 4 et 13.

8. Procédé selon les revendications 1 à 7 prises séparément, caractérisé par le fait que l'on régénère la résine en éluant le thallium au moyen d'une solution acide à un pH inférieur à environ 1.

9. Procédé selon les revendications 3 à 6 prises séparément, caractérisé par le fait que l'on régénère la résine en éluant l'arsenic au moyen d'une solution basique à un pH supérieur à 8.

10. Procédé selon les revendications 3 à 6, 8 et 9, prises séparément, caractérisé par le fait qu'il comporte les étapes suivantes :
    a) fixation du thallium et de l'arsenic à un pH compris entre 1 et 3, l'arsenic et le thallium étant présents dans une solution de sulfate de zinc et/ou de cadmium
    b) élution du thallium au moyen d'acide sulfurique à une normalité comprise entre 0,5 et 5
    c) élution de l'arsenic au moyen d'une solution alcaline choisie dans le groupe des hydroxydes et des carbonates alcalins et d'ammoniums (ammoniaque, amine, tétra-alcoyl ammonium) à un pH supérieur à 8.

11. Procédé selon les revendications 3 à 5, 8 à 9 prises séparément, caractérisé par le fait que l'on sépare l'arsenic et le thallium par la séquence d'étapes suivantes :
    a) mise en contact de la solution avec la résine à groupement thiol à un pH inférieur à 1
    b) neutralisation partielle pour amener la solution à un pH compris entre 2 à 5 et mise en contact avec un autre lit de résine du même type que le précédent
    c) cémentation éventuelle du cadmium à la poudre de zinc
    d) régénération de la résine chargée en arsenic dans l'étape a) au moyen d'une solution alcaline choisie dans le groupe des hydroxydes et des carbonates alcalins et d'ammoniums
    e) régénération de la résine chargée en thallium dans l'étape b) au moyen d'une élution à l'acide sulfurique à une normalité comprise entre 0,5 et 5.

## Patentansprüche

1. Verfahren zur Extraktion und Rückgewinnung von Thallium aus einer Lösung, die Thallium in Form von Salzen starker Mineralsäuren enthält, dadurch gekennzeichnet, daß es eine Stufe des In-Kontakt-Bringens der genannten Lösung mit einem Ionenaustauscherharz umfaßt, das eine Thiolgruppe aufweist.

2. Verfahren nach Anspruch 1, dadurch gekennzeichnet, daß das Ionenaustauscherharz, das die Thiolgruppe aufweist, ebenfalls benachbarte sulfonische Gruppen umfaßt.

3. Verfahren nach Anspruch 1 und 2, dadurch gekennzeichnet, daß die Lösung außerdem Salze enthält, ausgewählt aus der durch die Salze von Zink, Cadmium, Nickel, Cobalt, Blei, Wismut und Arsen gebildeten Gruppe.

4. Verfahren nach einem der Ansprüche 1 bis 3, dadurch gekennzeichnet, daß man das Redoxpotential auf einem reduzierenden Niveau hält.

5. Verfahren nach Anspruch 4, dadurch gekennzeichnet, daß das Redoxpotential in dem Diagramm Redoxpotential/pH unterhalb einer Linie gehalten wird, die sich von 0.45 V bei pH 0 bis zu +0.2 V bei pH 6 und danach -0,1 V bei pH 13 verändert.

6. Verfahren nach einem der Ansprüche 1 bis 5, dadurch gekennzeichnet, daß der pH auf einem Wert von höher als 1 gehalten wird.

7. Verfahren nach einem der Ansprüche 3 bis 6, dadurch gekennzeichnet, daß man den pH auf einem Wert zwischen 4 und 13 einstellt, um selektiv das Thallium im Verhältnis zum Arsen zu fixieren.

8. Verfahren nach einem der Ansprüche 1 bis 7, dadurch gekennzeichnet, daß man das Harz regeneriert, indem man das Thallium mit Hilfe einer sauren Lösung bei einem pH von unterhalb etwa 1 eluiert.

9. Verfahren nach einem der Ansprüche 3 bis 6, dadurch gekennzeichnet, daß man das Harz regeneriert, indem man das Arsen mit Hilfe einer basischen Lösung bei einem pH von höher als 8 eluiert.

10. Verfahren nach einem der Ansprüche 3 bis 6, 8 und 9, dadurch gekennzeichnet, daß es die folgenden Stufen umfaßt:
    a) Fixierung des Thalliums und des Arsens bei einem pH-Wert zwischen 1 und 3, wobei das Arsen und das Thallium in einer Lösung der Sulfate von Zink und/oder Cadmium anwesend sind,
    b) Eluieren des Thalliums mit Hilfe von Schwefelsäure bei einer Normalität zwischen 0,5 und 5,
    c) Eluieren des Arsens mit Hilfe einer alkalischen Lösung, ausgewählt aus der Gruppe der Hydroxide und der Carbonate von Alkalien und Ammonium (Ammoniak, Amin, Tetraalkyl-ammonium) bei einem pH-Wert von höher als 8.

11. Verfahren nach einem der Ansprüche 3 bis 5, 8 und 9, dadurch gekennzeichnet, daß man das Arsen und das Thallium durch die Aufeinanderfolge der nachstehenden Stufen trennt:
    a) In-Kontakt-Bringen der Lösung mit dem Thiolgruppen enthaltenden Harz bei einem pH-Wert von unter 1,
    b) teilweise Neutralisation, um die Lösung auf einen pH-Wert zwischen 2 und 5 zu führen und In-Kontakt-Bringen mit einem anderen Bett des gleichen Harztyps wie vorstehend,
    c) gegebenenfalls Binden des Cadmiums an Zinkpulver,
    d) Regenerierung des in der Stufe a) mit Arsen beladenen Harzes mit Hilfe einer alkalischen Lösung, ausgewählt aus der Gruppe der Hydroxide und der Carbonate von Alkalien und Ammonium,
    e) Regenerierung des in der Stufe b) mit Thallium beladenen Harzes mit Hilfe einer Elution mit Schwefelsäure bei einer Normalität zwischen 0,5 und 5.

## Claims

1. A process for extracting and recovering thallium from a solution which contains it in the form of salts of strong inorganic acids, which comprises a stage of bringing the said solution into contact with an ion exchange resin containing a thiol group.

2. The process as claimed in claim 1, wherein the ion exchange resin containing the thiol group also contains vicinal sulfonic groups.

3. The process as claimed in claim 1 and 2, wherein the solution additionally contains salts chosen from the group consisting of zinc, cadmium, nickel, cobalt, lead, bismuth and arsenic salts.

4. The process as claimed in claims 1 to 3, taken separately, wherein the redox potential is maintained at a reducing level.

5. The process as claimed in claim 4, wherein the redox potential is maintained on the redox potential/pH diagram below a line varying from 0.45 V at pH 0 up to + 0.2 V at pH 6, and then - 0.1 V at pH 13.

6. The process as claimed in claims 1 to 5, taken separately, wherein the pH is maintained at a value higher than 1.

7. The process as claimed in claims 3 to 6, taken separately, wherein, in order to fix thallium selectively relative to arsenic, the pH is fixed at a value of between 4 and 13.

8. The process as claimed in claims 1 to 7, taken separately, wherein the resin is regenerated by eluting the thallium by means of an acidic solution at a pH lower than approximately 1.

9. The process as claimed in claims 3 to 6, taken separately, wherein the resin is regenerated by eluting the arsenic by means of a basic solution at a pH higher than 8.

10. The process as claimed in claims 3 to 6, 8 and 9, taken separately, which comprises the following stages:
    a) fixing thallium and arsenic at a pH of between 1 and 3, the arsenic and the thallium being present in a solution of zinc and/or cadmium sulfate
    b) eluting thallium by means of sulfuric acid at a normality of between 0.5 and 5
    c) eluting arsenic by means of an alkaline solution chosen from the group of alkali metal and ammonium (aqueous ammonia, amine, tetraalkylammonium) hydroxides and carbonates at a pH higher than 8.

11. The process as claimed in claims 3 to 5, 8 to 9, taken separately, wherein arsenic and thallium are separated by the following sequence of stages:
    a) bringing the solution into contact with the resin containing a thiol group at a pH lower than 1
    b) partially neutralizing to bring the solution to a pH of between 2 and 5 and bringing it into contact with another bed of resin of the same type as the preceding one
    c) optionally cementing cadmium to zinc powder
    d) regenerating the resin which is charged with arsenic in stage a) by means of an alkaline solution chosen from the group of alkali metal and ammonium hydroxides and carbonates
    e) regenerating the resin charged with thallium in stage b) by means of eluting with sulfuric acid at a normality of between 0.5 and 5.